(19) Europäisches Patentamt
European Patent Office
Office européen des brevets

(11) EP 4 254 935 A1

(12) EUROPEAN PATENT APPLICATION
published in accordance with Art. 153(4) EPC

(43) Date of publication:
04.10.2023 Bulletin 2023/40

(51) International Patent Classification (IPC):
H04N 5/232 $^{(2006.01)}$    H04N 5/225 $^{(2006.01)}$
H04N 9/07 $^{(2006.01)}$

(21) Application number: 21897546.4

(22) Date of filing: 19.10.2021

(52) Cooperative Patent Classification (CPC):
H04N 23/00; H04N 23/12; H04N 23/60

(86) International application number:
PCT/JP2021/038543

(87) International publication number:
WO 2022/113568 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.11.2020 JP 2020198069

(71) Applicant: Sony Group Corporation
Tokyo 108-0075 (JP)

(72) Inventors:
• ONO, Taishi
Tokyo 108-0075 (JP)
• KONDO, Yuhi
Tokyo 108-0075 (JP)
• SUN, Legong
Tokyo 108-0075 (JP)

(74) Representative: D Young & Co LLP
120 Holborn
London EC1N 2DY (GB)

(54) IMAGE PROCESSING DEVICE, IMAGE PROCESSING METHOD, AND PROGRAM

(57) A black-and-white polarized image acquirer 21 of an image acquirer 20 acquires a black-and-white polarized image, and a color image acquirer 22 acquires a color image. A reflection-removed image generator 40 calculates characteristic information related to black-and-white reflection removal results generated based on a black-and-white polarized image. For example, the reflection-removed image generator calculates information indicating a relationship between the black-and-white polarized image and an average luminance calculated from an image for each polarization direction in the black-and-white polarized image, or information used for obtaining the black-and-white reflection removal results from the black-and-white polarized image. The reflection-removed image generator 40 generates a reflection-removed color image in which specular reflection is removed from the color image using the calculated characteristic information or the optimized characteristic information. Thus, a high-sensitivity reflection-removed color image is obtained.

Fig. 1

**Description**

[Technical Field]

The present technology relates to an image processing device, an image processing method, and a program, and enables a reflection-removed color image with high sensitivity to be obtained.

[Background Art]

Conventionally, since the polarization information of the reflection component and the transmission component is different, NPL 1 discloses a method of removing reflection reflected on a glass surface or water surface using a polarized image. PTL 1 discloses removing a reflection component using an angle of a reflecting surface such as glass or a water surface for an imaging device that acquires a polarized image.

[Citation List]

[Patent Literature]

[PTL 1] WO 2018/092540

[Non Patent Literature]

[NPL 1] Daisuke Miyazaki, Katsushi Ikeuchi "Basic Theory of Polarization and Its Applications" IPSJ Transactions on Computer Vision and Image Media, Vol. 1, No. 1, pp. 64-72, 2008.

[Summary]

[Technical Problem]

By the way, in an imaging device that acquires a polarized image, subject light is incident on an imaging element via a polarizing element such as a polarizing plate. When acquiring a color polarized image as the polarized image, the imaging device causes subject light to enter the imaging element via the polarizing element and a color filter. For this reason, not only the light attenuation by the polarizer but also the light attenuation by the color filter occurs at the same time. Therefore, when a reflection-removed color image from which specular reflection is removed is generated based on a color polarized image, it is difficult to obtain a high-sensitivity reflection-removed color image.

Therefore, an object of the present technology is to provide an image processing device, an image processing method, and a program capable of obtaining a high-sensitivity reflection-removed color image.

[Solution to Problem]

A first aspect of the present technology provides an image processing device including a reflection-removed image generator that calculates characteristic information related to black-and-white reflection removal results generated based on a black-and-white polarized image, and generates a reflection-removed color image in which specular reflection is removed from a color image using the calculated characteristic information.

In the present technology, the reflection-removed image generator calculates characteristic information related to black-and-white reflection-removal results generated based on a black-and-white polarized image. The reflection-removed image generator calculates information indicating a relationship between the black-and-white polarized image and an average luminance calculated from an image for each polarization direction in the black-and-white polarized image as the characteristic information. When calculating such characteristic information, for example, the reflection-removed image generator generates the color polarized image by multiplying the color image by the characteristic information indicating a ratio of a luminance of the black-and-white polarized image to the average luminance to generate the reflection-removed color image in which the specular reflection calculated based on the generated color polarized image is removed from the color image. The color image is an image in an RGB color space, or a color space in which luminance and color are separated.

The reflection-removed image generator calculates information used for obtaining the black-and-white reflection removal results from the black-and-white polarized image as the characteristic information, optimizes the characteristic information using the calculated characteristic information as an initial value, and generates the reflection-removed color image based on the optimized characteristic information and the color image. The reflection-removed image generator calculates information related to specular reflection in the black-and-white polarized image as the characteristic information. For example, when calculating the Stokes parameters of the black-and-white polarized image used for calculation of the specular reflection component as the characteristic information, the reflection-removed image generator uses the Stokes parameters indicated by the characteristic information as initial values, and optimizes the characteristic information to minimize a geometric correlation or a correlation in a feature amount space between a luminance component and a specular reflection component of the color image. The reflection-removed image generator generates the reflection-removed color image using the color image and the optimized characteristic information.

The image processing device further includes a reflecting surface information acquirer that acquires reflecting surface information indicating an angle of a reflecting surface of a subject that causes the specular reflection, and the reflection-removed image generator calculates information indicating polarization characteristics of the black-and-white polarized image using together with the reflecting surface information acquired by the reflecting surface information acquirer as the characteristic information. For example, when a black-and-white reflection image and a black-and-white transmission image are calculated as the characteristic information, the reflection-removed image generator uses the black-and-white reflection image and the black-and-white transmission image as initial values to optimize the characteristic information to minimize a geometric correlation or a correlation in a feature amount space between a color reflection image and a color transmission image based on the color image. The reflection-removed image generator generates the reflection-removed color image using the color image, the optimized characteristic information, and the reflecting surface information acquired by the reflecting surface information acquirer.

An output unit that outputs the reflection-removed color image generated by the reflection-removed image generator outputs an evaluation index used in optimization of the characteristic information together with the reflection-removed color image. For example, the output unit superimposes a display based on the evaluation index on a corresponding position of the reflection-removed color image.

A second aspect of the present technology provides an image processing method including allowing a reflection-removed image generator to calculate characteristic information related to black-and-white reflection removal results generated based on a black-and-white polarized image and generate a reflection-removed color image in which specular reflection is removed from a color image using the calculated characteristic information.

A third aspect of the present technology provides a program for causing a computer to execute image processing, the computer executing: calculating characteristic information related to black-and-white reflection removal results generated based on a black-and-white polarized image; and generating a reflection-removed color image in which specular reflection is removed from a color image using the calculated characteristic information.

The program of the present technology is a program that can be provided in a general-purpose computer capable of executing various program codes by a storage medium provided in a computer-readable format or a communication medium, for example, a storage medium such as an optical disc, a magnetic disk or a semiconductor memory, or a communication medium such as a network. The provision of such a program in a computer-readable format allows processing according to the program to be realized on the computer.

[Brief Description of Drawings]

[Fig. 1]

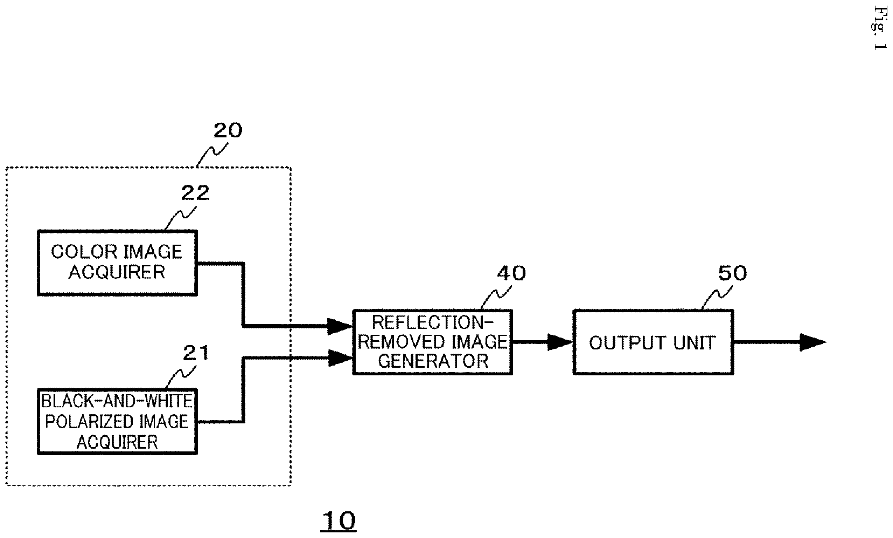

Fig. 1 is a diagram illustrating a configuration of a first embodiment.
[Fig. 2]

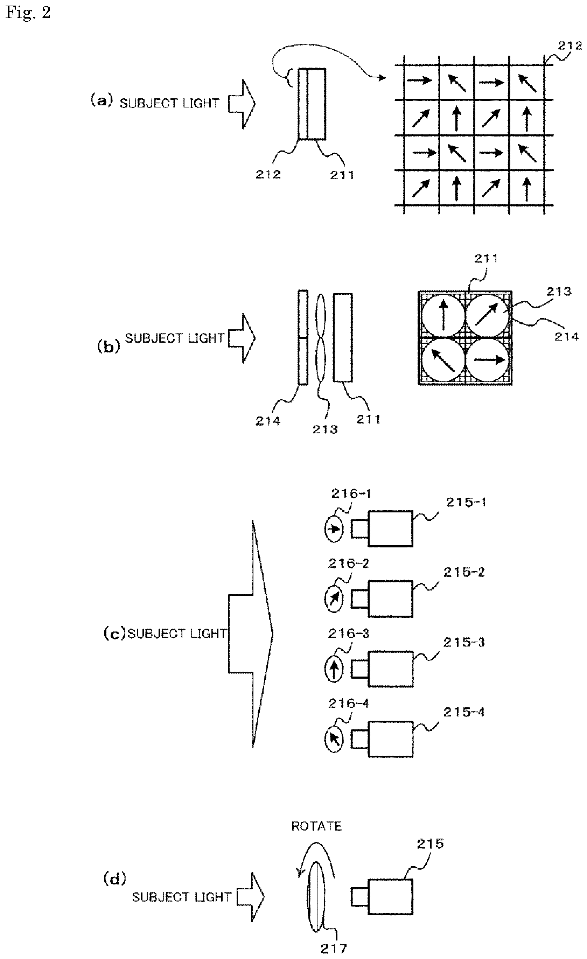

Fig. 2 is a diagram illustrating the configuration of a black-and-white polarized image acquirer.
[Fig. 3]

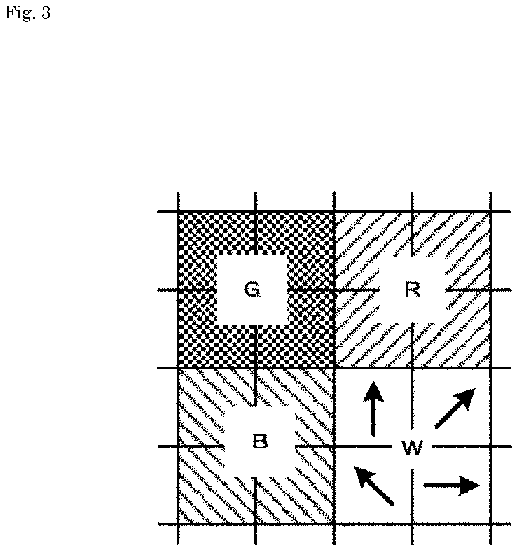

Fig. 3 is a diagram illustrating a pixel configuration when a black-and-white polarized image acquirer and a color image acquirer are integrated.
[Fig. 4]

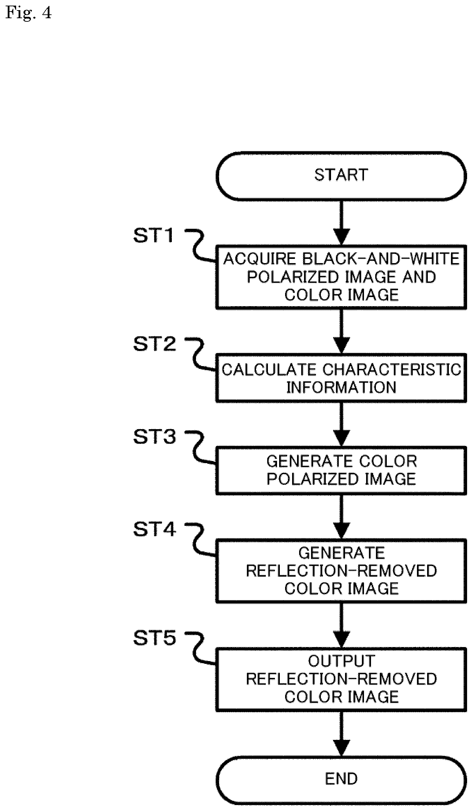

Fig. 4 is a flowchart illustrating the operation of the first embodiment.
[Fig. 5]

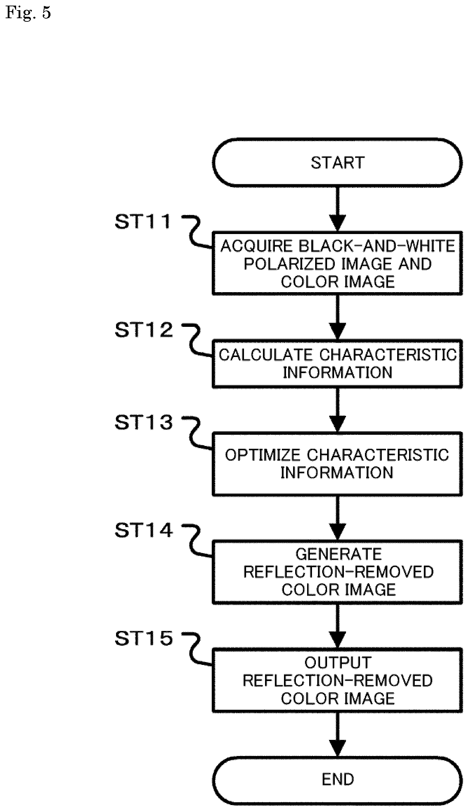

Fig. 5 is a flowchart illustrating the operation of a second embodiment.
[Fig. 6]

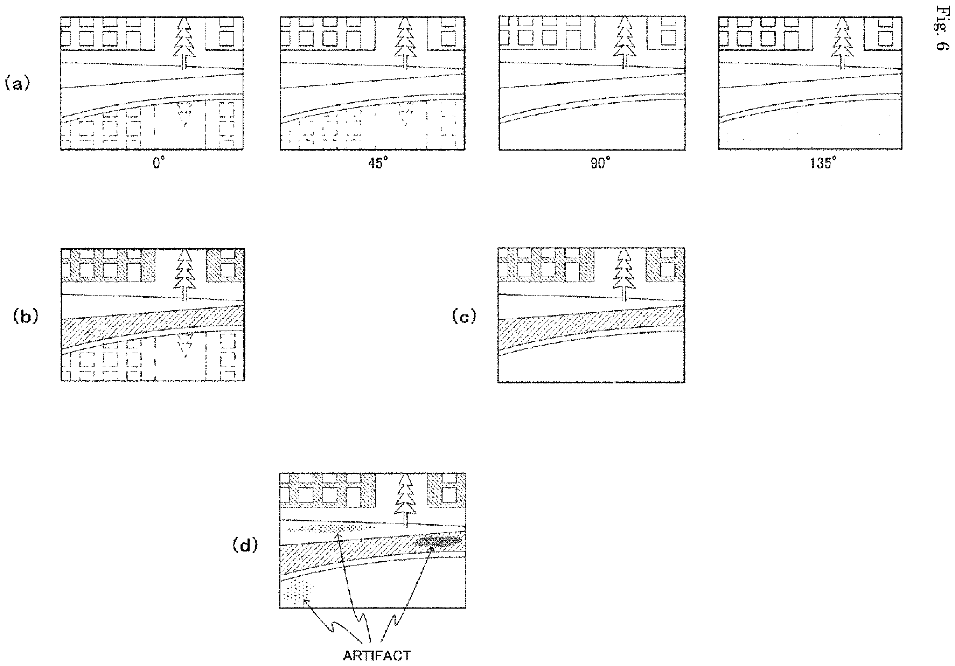

Fig. 6 is a diagram illustrating an operation example of the second embodiment.
[Fig. 7]

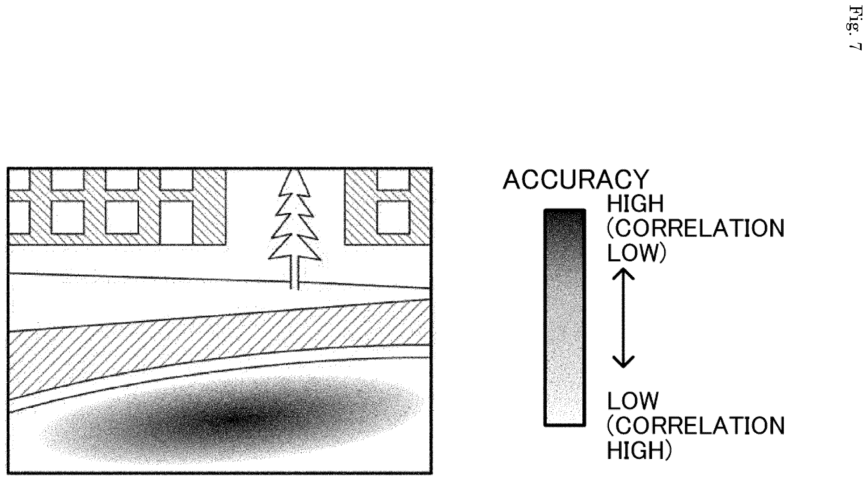

Fig. 7 is a diagram illustrating the output of a reflection-removed color image.
[Fig. 8]

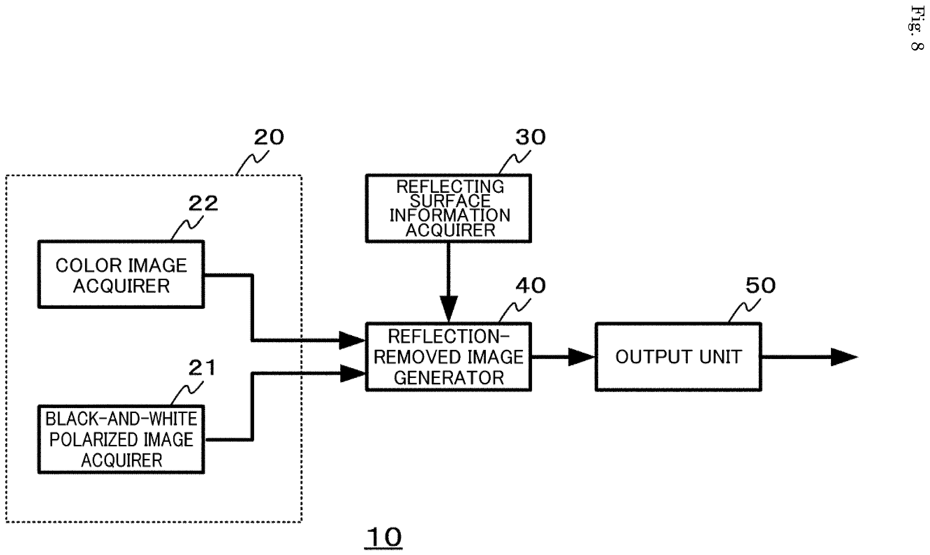

Fig. 8 is a diagram illustrating a configuration of a third embodiment.
[Fig. 9]

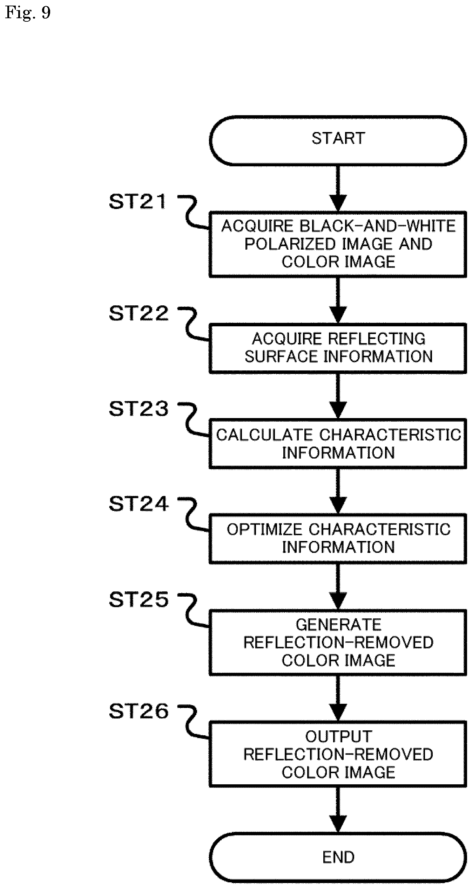

Fig. 9 is a flowchart illustrating the operation of the third embodiment.

[Description of Embodiments]

An embodiment for implementing the present technique will be described below. Here, description will proceed in the following order.

    1. First Embodiment

        1-1. Configuration of First Embodiment
        1-2. Operation of First Embodiment

    2. Second Embodiment
    2-1. Operation of Second Embodiment
    3. Third Embodiment

        3-1. Configuration of Third Embodiment
        3-2. Operation of Third Embodiment

    4. Modification Example
    5. Application Example

<1. First Embodiment>

The image processing device of the present technology images a subject that causes specular reflection to obtain a black-and-white polarized image and a color image, obtains characteristic information related to black-and-white reflection removal results generated based on the black-and-white polarized image, and generates a reflection-removed color image in which specular reflection is removed from the color image using the characteristic information.
The image processing device according to the first embodiment uses information indicating a relation between a luminance component of a black-and-white polarized image and a luminance component of black-and-white reflection removal results as characteristic information, generates a color polarized image based on the characteristic information and the color image, and generates a reflection-removed color image in which a specular reflection component calculated based on the generated color polarized image is removed from the color image.

<1-1. Configuration of First Embodiment>

Fig. 1 illustrates the configuration of the first embodiment. An image processing system 10 has an image acquirer 20, a reflection-removed image generator 40 and an output unit 50.
The image acquirer 20 has a black-and-white polarized image acquirer 21 that acquires a black-and-white polarized image and a color image acquirer 22 that acquires a color image. Note that in the following description, a case will be described in which an image in the RGB color space indicating the luminance of each color component of the red, green, and blue components is acquired as a color image.
The black-and-white polarized image acquirer 21 acquires black-and-white polarized images in a plurality of polarization directions. Fig. 2 illustrates the configuration of the black-and-white polarized image acquirer. For example, as illustrated in Fig. 2(a), the black-and-white polarized image acquirer 21 acquires polarized images by arranging a polarizing filter 212 composed of a plurality of pixels with a plurality of polarization directions in an image sensor 211 such as a CMOS (Complementary Metal Oxide Semiconductor) or a CCD (Charge Coupled Device). The polarizing filter 212 can extract linearly polarized light from subject light, and uses a wire grid, photonic liquid crystal, or the like, for example. The polarizing filter 212 is composed of pixels with three or more different polarization directions, for example, pixels with polarization directions of 0°, 45°, 90°, and 135°, so that the polarization characteristics can be calculated by cosine fitting or the like. Therefore, the black-and-white polarized image acquirer 21 can acquire images in four polarization directions in one imaging operation. The arrows illustrated in Figs. 2(a), 2(b), and 2(c) and Fig. 3 indicate the polarization directions.
The black-and-white polarized image acquirer 21 may generate a plurality of polarized images with different polarization directions using a multi-lens array configuration, as illustrated in Fig. 2(b). For example, a plurality of lenses 213 (four in the figure) are provided in front of the image sensor 211, and each lens 213 forms an optical image of a subject on the imaging surface of the image sensor 211. A polarizing plate 214 is provided in front of each lens 213, and a plurality of polarized images having different polarization directions are generated by setting the polarization directions of the polarizing plate 214 to be different directions. By configuring the black-and-white polarized image acquirer 21 in this way, it is possible to acquire a plurality of polarized images in one imaging operation. As illustrated in Fig. 2(c), polarizing plates 216-1 to 216-4 having different polarization directions may be provided in front of the imaging units 215-1 to 215-4 to generate a plurality of polarized images with different polarization directions from a plurality of different viewpoints.

As illustrated in Fig. 2(d), a polarizing plate 217 may be provided in front of the imaging unit 215. In this case, the polarizing plate 217 is rotated to capture images in a plurality of different polarization directions, thereby obtaining a plurality of polarized images with different polarization directions.

In the case of Figs. 2(b) and 2(c), if the positional intervals of the lenses 213 and the imaging units 215-1 to 215-4 are so short as to be negligible with respect to the distance to the subject, parallax can be ignored in a plurality of polarized images with different polarization directions. Therefore, by averaging the luminance of polarized images with different polarization directions, it is possible to obtain an image equivalent to a non-polarized normal luminance image. If the parallax cannot be ignored, the polarized images with different polarization directions are aligned according to the amount of parallax, and the luminance of the polarized images after alignment is averaged, whereby an image equivalent to the non-polarized normal luminance image can be obtained. In the case of Fig. 2(d), by averaging the luminance of the polarized images with different polarization directions for each pixel, an image equivalent to the non-polarized normal luminance image can be obtained.

The color image acquirer 22 performs imaging by providing, for example, a three-primary-color mosaic filter on the imaging surface of the image sensor, and generates a color image.

The black-and-white polarized image acquirer 21 and the color image acquirer 22 may be integrated. Fig. 3 illustrates a pixel configuration when the black-and-white polarized image acquirer and the color image acquirer are integrated. A pixel block of 4 pixels×4 pixels is composed of a red pixel block R, a green pixel block G and a blue pixel block B each of which is 2×2 pixels. The remaining pixel block W of 2×2 pixels is not provided with a color filter, and is a polarized pixel block provided with a polarizing filter. The polarized pixel block is composed of four polarized pixels with different polarization directions. With a pixel configuration in which such pixel blocks of 4 pixels×4 pixels are repeatedly provided in the horizontal direction and the vertical direction, the pixel values of each color of the color image and the pixel values for each of the four polarization directions of the black-and-white polarized image can be obtained for each pixel block of 4 pixels×4 pixels.

The reflection-removed image generator 40 calculates, in units of pixels or pixel blocks, information indicating a relationship between a luminance of the black-and-white polarized image and an average luminance calculated from images for each polarization direction of the black-and-white polarized image acquired by the black-and-white polarized image acquirer 21 as characteristic information related to the black-and-white reflection removal results generated based on the black-and-white polarized image, generates a color polarized image based on the calculated characteristic information abnormality detection signal the color image acquired by the color image acquirer 22, and generates a reflection-removed color image in which a specular reflection component calculated based on the generated color polarized image is removed from the color image.

The output unit 50 outputs the reflection-removed color image generated by the reflection-removed image generator 40 to an image display device or the like for display. The output unit 50 may output the reflection-removed color image to a recording device to record it on a recording medium, or may transmit the reflection-removed color image to an external device or the like via a network or the like.

<1-2. Operation of First Embodiment>

Fig. 4 is a flowchart illustrating the operation of the first embodiment. In step ST1, the image processing system acquires a black-and-white polarized image and a color image. The black-and-white polarized image acquirer 21 of the image processing system 10 acquires a black-and-white polarized image. The color image acquirer 22 acquires a color image, and then, the process proceeds to step ST2.

In step ST2, the image processing system calculates characteristic information. The reflection-removed image generator 40 of the image processing system 10 generates a black-and-white image representing the average value of luminance changes due to the difference in the polarization direction from the black-and-white polarized image. The reflection-removed image generator 40 calculates the ratio ($I_{gray,pol}/I_{gray,intensity}$) of the pixel value $I_{gray,pol}$ of the black-and-white polarized image to the pixel value $I_{gray,intensity}$ of the generated black-and-white image as characteristic information for each pixel (or for each pixel block), and then, the process proceeds to step ST3.

In step ST3, the image processing system generates a color polarized image. The reflection-removed image generator 40 of the image processing system 10 considers that the relationship between the color image and the color polarized image is the same as the relationship between the black-and-white image and the black-and-white polarized image, and calculates the pixel values ($I_{R,pol}$, $I_{G,pol}$, $I_{B,pol}$) of the color polarized image from the characteristic information and the pixel values ($I_{R,intensity}$, $I_{G,intensity}$, $I_{B,intensity}$) of the color image based on Equations (1) to (3), and then, the process proceeds to step ST4.
[Math. 1]

$$I_{R,pol} = \frac{I_{gray,pol} \times I_{R,intensity}}{I_{gray,intensity}} \quad \cdots (1)$$

$$I_{G,pol} = \frac{I_{gray,pol} \times I_{G,intensity}}{I_{gray,intensity}} \quad \cdots (2)$$

$$I_{B,pol} = \frac{I_{gray,pol} \times I_{B,intensity}}{I_{gray,intensity}} \quad \cdots (3)$$

In step ST4, the image processing system generates a reflection-removed color image. The reflection-removed image generator 40 of the image processing system 10 calculates a specular reflection component based on the polarization characteristics of the color polarized image, removes the specular reflection component from the color image to generate the reflection-removed color image, and then, the process proceeds to step ST5.

In step ST5, the image processing system outputs a reflection-removed color image. The image output unit of the image processing system 10 outputs the reflection-removed color image generated in step ST4 to an external device such as a display device, a recording device, or a control device that performs various types of control using the reflection-removed color image.

As described above, according to the first embodiment, a color polarized image with high sensitivity can be generated without performing imaging via a polarizing element and a color filter. Therefore, a reflection-removed color image can be generated with higher sensitivity than when a reflection-removed color image is generated from a color polarized image acquired by performing imaging using a polarizing element and a color filter.

<2. Second Embodiment>

By the way, in the first embodiment, the color polarized image is calculated from the color image and the characteristic information indicating the relationship between the black-and-white image and the black-and-white polarized image by considering that the relationship between the color image and the color polarized image is the same as the relationship between the black-and-white image and the black-and-white polarized image. Therefore, if the relationship between the color image and the color polarized image does not match the relationship between the black-and-white image and the black-and-white polarized image, the pixel values ($I_{R,pol}$, $I_{G,pol}$, $I_{B,pol}$) of the color image calculated based on Equations (1) to (3) are different from the true values and artifacts (color change regions) may occur in the reflection-removed color image.

Therefore, the image processing device according to the second embodiment calculates information used for obtaining black-and-white reflection removal results from black-and-white polarized images as the characteristic information and generates a reflection-removed color image based on the characteristic information and the color image. The image processing device optimizes the characteristic information and generates the reflection-removed color image based on the optimized characteristic information and the color image. The image processing device calculates information related to specular reflection in the black-and-white polarized image as characteristic information, and optimizes the characteristic information to minimize the correlation between the luminance component and the specular reflection component of the color image. The image processing device uses the color image and the optimized characteristic information to generate an artifact-free reflection-removed color image. The image processing device uses the calculated characteristic information as an initial value in optimizing the characteristic information.

<2-1. Configuration and Operation of Second Embodiment>

The second embodiment has the same configuration as the first embodiment, and differs from the first embodiment in the operation of the reflection-removed image generator 40.

Fig. 5 is a flowchart illustrating the operation of the second embodiment. In step ST11, the image processing system acquires a black-and-white polarized image and a color image. The black-and-white polarized image acquirer 21 of the image processing system 10 acquires a black-and-white polarized image. The color image acquirer 22 acquires a color image, and then, the process proceeds to step ST12.

In step ST12, the image processing system calculates characteristic information. It is known that the change in luminance observed when the polarization direction (polarization angle) is changed in the imaging unit that acquires the polarized image can be fitted to a cosine curve, and the varying portion of the cosine curve corresponds to the specular reflection component. The polarization characteristics of the subject can be represented by a four-dimensional vector called the Stokes vector Sv illustrated in Equation (4). In the Stokes vector Sv, the Stokes parameter $S_0$ indicates the non-polarized luminance or average luminance. The Stokes parameter $S_1$ is the difference in intensity between the polarization directions of 0° and 90°, the Stokes parameter $S_2$ is the difference in intensity between the polarization directions of 45° and 135°, and the Stokes parameter $S_3$ is the degree of polarization of circularly polarized light.

[Math. 2]

$$\boldsymbol{Sv} = \begin{bmatrix} S_0 \\ S_1 \\ S_2 \\ S_3 \end{bmatrix} \cdots (4)$$

Here, when the polarization direction of the black-and-white polarized image acquirer 21 is composed of polarized pixels with polarization directions of 0°, 45°, 90°, and 135°, the Stokes parameter $S_{gray,0}$ of the black-and-white polarized image can be calculated based on Equation (5). The Stokes parameter $S_{gray,1}$ of the black-and-white polarized image can be calculated based on Equation (6). The Stokes parameter $S_{gray,2}$ of the black-and-white polarized image can be calculated based on Equation (7).

[Math. 3]

$$S_{gray,0} = \frac{I_{gray,0} + I_{gray,45} + I_{gray,90} + I_{gray,135}}{4} \cdots (5)$$

$$S_{gray,1} = (I_{gray,0} - I_{gray,90}) / 2 \cdots (6)$$

$$S_{gray,2} = (I_{gray,45} - I_{gray,135})/2 \cdots (7)$$

Using these Stokes parameters, the cosine curve calculated from the polarized image is given by Equation (8). Since the pixel value ($I_{gray,pol}$) calculated by Equation (8) is the minimum value when Equation (9) is satisfied, the pixel value ($I_{gray,min}$) of the black-and-white reflection removal results can be calculated based on Equation (10).

[Math. 4]

$$I_{gray,pol} = S_{gray,0} + \sqrt{S_{gray,1}^2 + S_{gray,2}^2}\cos 2(\theta_{pol} - \phi) \cdots (8)$$

$$\cos 2(\theta_{pol} - \phi) = -1 \cdots (9)$$

$$I_{gray,min} = S_{gray,0} - \sqrt{S_{gray,1}^2 + S_{grqy,2}^2} \cdots (10)$$

Therefore, the reflection-removed image generator 40 of the image processing system 10 calculates information used for obtaining the black-and-white reflection removal result from the black-and-white polarized image, for example, the Stokes parameter $S_{gray,1}$ and the Stokes parameter $S_{gray,2}$ as the characteristic information, and then, the process proceeds step ST13.

In step ST13, the image processing system optimizes the characteristic information. The reflection removal result for a color image is given by Equation (11), similarly to Equation (10). In Equation (11), the Stokes parameters $S_{RGB,1}$ and $S_{RGB,2}$ are unknown. Therefore, the reflection-removed image generator 40 of the image processing system 10 uses the Stokes parameter $S_{RGB,0}$ corresponding to the luminance component of the color image and the Stokes parameters $S_{RGB,1}$ and $S_{RGB,2}$ to optimize the Stokes parameters which are the characteristic information to minimize the correlation with the specular reflection component illustrated in Equation (12).

[Math. 5]

$$I_{RGB,min} = S_{RGB,0} - \sqrt{S_{RGB,1}^2 + S_{RGB,2}^2} \quad \cdots (11)$$

$$\sqrt{S_{RGB,1}^2 + S_{RGB,2}^2} \quad \cdots (12)$$

The reflection-removed image generator 40 calculates the correlation between the luminance component and the specular reflection component of the color image using the Stokes parameters $S_{gray,1}$ and $S_{gray,2}$ when calculating the pixel value ($I_{gray,min}$) of the black-and-white reflection removal result in the reflection removal of the black-and-white image as the initial values of the Stokes parameters $S_{RGB,1}$ and $S_{RGB,2}$. The reflection-removed image generator 40 may calculate the geometric correlation by utilizing, for example, the fact that the image of the luminance component and the image of the specular reflection component are different. Alternatively, the reflection-removed image generator 40 may calculate the correlation in a feature amount space by using different feature amounts for the luminance component and the specular reflection component. Methods such as PSNR (Peak Signal-to-Noise Ratio), ZNCC (Zero-mean Normalized Cross-Correlation), and SSIM (Structural Similarity) are used for calculating the geometric correlation. A method such as CNN (Convolutional Neural Network) is used for the correlation of the feature amount space. The reflection-removed image generator 40 calculates the correlation while changing the Stokes parameters $S_{RGB,1}$ and $S_{RGB,2}$ from the initial values, and optimizes the Stokes parameters so that the correlation is minimized. The reflection-removed image generator 40 calculates the Stokes parameters $S_{RGB,1}$ and $S_{RGB,2}$ that minimize the correlation using a method such as regression or CNN using a gradient method or ADMN (Alternating Direction Method of Multipliers), and then, the process proceeds to step ST14.

In step ST14, the image processing system generates a reflection-removed color image. The reflection-removed image generator 40 of the image processing system 10 performs the calculation of Equation (11) using the Stokes parameters $S_{RGB,1}$ and $S_{RGB,2}$ optimized in step ST13 to generate a reflection-removed color image from which specular reflection is removed, and then, the process proceeds to step ST15.

In step ST15, the image processing system outputs a reflection-removed color image. The output unit 50 of the image processing system 10 outputs the reflection-removed color image generated in step ST14 to an external device such as a display device, a recording device, or a control device that performs various types of control using the reflection-removed color image. The output unit 50 may use the correlation, which is an evaluation index used in the optimization of the characteristic information in the reflection-removed image generator 40, as the accuracy of the reflection removal result, for example, and superimpose a display based on the correlation when the characteristic information is optimized on the corresponding position of the reflection-removed color image. The output unit 50 may divide the image acquired by the image acquirer 20 into a plurality of regions, calculate the correlation for each region, and superimpose a display based on the correlation when the characteristic information is optimized on the corresponding region of the reflection-removed color image.

Fig. 6 is a diagram illustrating an operation example of the second embodiment. Fig. 6(a) illustrates polarized images for each of the four polarization directions acquired by the black-and-white polarized image acquirer 21. Fig. 6(b) illustrates a color image acquired by the color image acquirer 22.

The reflection-removed image generator 40 calculates Stokes parameters $S_{gray,1}$ and $S_{gray,2}$ from the polarized images of 0°, 45°, 90°, and 135° illustrated in Fig. 6(a). The reflection-removed image generator 40 uses the Stokes parameters $S_{gray,1}$ and $S_{gray,2}$ as initial values of the Stokes parameters $S_{RGB,1}$ and $S_{RGB,2}$. The reflection-removed image generator 40 calculates the correlation between the luminance component and the specular reflection component of the color image, and calculates Stokes parameters $S_{RGB,1}$ and $S_{RGB,2}$ that minimize the correlation. The reflection-removed image generator 40 generates a reflection-removed color image illustrated in FIG. 6(c) in which the specular reflection is removed from the color image illustrated in Fig. 6(b) using the optimized Stokes parameters $S_{RGB,1}$ and $S_{RGB,2}$.

When the reflection removal processing of the color image illustrated in Fig. 6(b) is performed using the method of the first embodiment, even if artifacts occur as illustrated in Fig. 6(d), by using the method illustrated in the second embodiment, it is possible to generate an artifact-free reflection-removed color image, as illustrated in Fig. 6(c).

Fig. 7 illustrates the output of a reflection-removed color image. The output unit 50 outputs the reflection-removed color image and the evaluation index used in the optimization of the characteristic information. By superimposing a display based on the evaluation index, for example, on the corresponding position of the reflection-removed color image, the reflection-removed color image can be confirmed and the occurrence state of the specular reflection can be grasped.

As described above, according to the second embodiment, as in the first embodiment, a reflection-removed color image can be generated with higher sensitivity than when a reflection-removed color image is generated from a color polarized image acquired by performing imaging via a polarizing element and a color filter. According to the second embodiment, it is possible to generate an artifact-free reflection-removed color image. The occurrence state of specular reflection can be grasped by the display based on the evaluation index.

<3. Third Embodiment>

In the second embodiment, the case where the angle of the reflecting surface with respect to the image acquirer 20 of the subject that causes specular reflection is not known has been described. However, in the third embodiment, the case where the angle of the reflecting surface is known will be described. When the angle of the reflecting surface is known, the transmission image and the reflection image can be calculated as illustrated in PTL 1. Therefore, the black-and-white reflection image and the black-and-white transmission image calculated based on the black-and-white polarized image are used as characteristic information.

<3-1. Configuration of Third Embodiment>

Fig. 8 illustrates a configuration of a third embodiment. The image processing system 10 has an image acquirer 20, a reflecting surface information acquirer 30, a reflection-removed image generator 40 and an output unit 50.

The image acquirer 20 has a black-and-white polarized image acquirer 21 that acquires a black-and-white polarized image and a color image acquirer 22 that acquires a color image, as in the first embodiment.

The black-and-white polarized image acquirer 21 acquires black-and-white polarized images in a plurality of polarization directions. The color image acquirer 22 generates a color image by providing, for example, a three-primary-color mosaic filter on the imaging surface of the image sensor.

The reflecting surface information acquirer 30 acquires the reflecting surface information indicating the angle of the reflecting surface of the subject that causes specular reflection in the image acquired by the image acquirer 20, as in PTL 1, and inputs the reflecting surface information to the reflection-removed image generator 40.

Various methods are conceivable for obtaining the angle of reflection corresponding to each pixel of an image. For example, it is possible to store angle data input by the user (photographer) in a memory according to the photographing angle of a camera that images a subject that causes specular reflection, and use the stored data to calculate the angle of the reflecting surface.

Alternatively, information from an angular sensor or the like provided in a camera that images a subject that causes specular reflection may be set attribute information of an image and be stored in a memory, and the stored data may be used for calculating the angle of the reflecting surface.

Alternatively, specified angle information such as 45° may be stored in advance in a memory and the angle information may be used as the angle of the reflecting surface.

The angle of the reflecting surface may be calculated as a strict reflection angle for each pixel that is different for each pixel that constitutes an image. However, the same angle in common may be simply set and used for all of the constituent pixels of the image, or for each pixel group of each predetermined region.

The reflecting surface information acquirer 30 acquires the reflecting surface information indicating the angle of the reflecting surface of the subject included in the image acquired by the image acquirer 20, for example, by any of the above methods, and outputs the reflecting surface information to the reflection-removed image generator 40.

The reflection-removed image generator 40 calculates information, for example, the black-and-white reflection image and the black-and-white transmission image, indicating the polarization characteristics of the black-and-white polarized image using together with the reflecting surface information acquired by the reflecting surface information acquirer 30 as the characteristic information. The reflection-removed image generator 40 uses the characteristic information calculated based on the black-and-white polarized image as an initial value to optimize the characteristic information according to the color image, and generates the reflection-removed color image using the color image, the optimized characteristic information, and the reflecting surface information acquired by the reflecting surface information acquirer 30.

The output unit 50 outputs the reflection-removed color image generated by the reflection-removed image generator 40 to an image display device or the like for display. The output unit 50 may output the reflection-removed color image to a recording device to record it on a recording medium, or may transmit the reflection-removed color image to an external device or the like via a network or the like. The output unit 50 may use the correlation, which is an evaluation index used in the optimization of the characteristic information in the reflection-removed image generator 40, as the accuracy of the reflection removal result, for example, and superimpose a display based on the correlation when the characteristic information is optimized on the corresponding position of the reflection-removed color image. The output unit 50 may divide the image acquired by the image acquirer 20 into a plurality of regions, calculate the correlation for each region, and superimpose a display based on the correlation when the characteristic information is optimized on the corresponding region of the reflection-removed color image.

<3-2. Operation of Third Embodiment>

Fig. 9 is a flowchart illustrating the operation of the third embodiment. In step ST21, the image processing system acquires a black-and-white polarized image and a color image. The black-and-white polarized image acquirer 21 of the image processing system 10 acquires a black-and-white polarized image. The color image acquirer 22 acquires a color image, and then, the process proceeds to step ST22.

In step ST22, the image processing system acquires reflecting surface information. The reflecting surface information acquirer 30 of the image processing system 10 receives the input of the reflecting surface angle, and outputs reflecting surface information indicating the zenith angle $\theta$ and the azimuth angle $\varphi$ of the reflecting surface to the reflection-removed image generator 40.

In step ST23, the image processing system calculates characteristic information. It is known that the reflection-removed image generator 40 of the image processing system 10 can fit the luminance change observed when the polarization angle is changed to a cosine curve, as described above. Here, when the angle of the reflecting surface is known, the cosine curve can be expressed as Equation (13) as disclosed in PTL 1. In equation (13), "Rs" and "Rp" are the Fresnel reflectance for the polarization component perpendicular to the reflecting surface and the Fresnel reflectance for the polarization component parallel to the reflecting surface, respectively, and "$T_S$" and "$T_P$" are the Fresnel transmittance for the polarization component perpendicular to the reflecting surface and the Fresnel transmittance for the polarization component parallel to the reflecting surface, respectively.

[Math. 6]

$$I_{gray,pol} = S_{gray,0} + \frac{1}{2}\left[\begin{array}{c}\left(R_s(\theta) - R_p(\theta)\right)I_{gray,refl} \\ + \left(T_s(\theta) - T_p(\theta)\right)I_{gray,trans}\end{array}\right]\cos 2\left(\theta_{pol} - \phi\right) \quad \cdots (13)$$

$$I_{RGB,pol} = S_{RGB,0} + \frac{1}{2}\left[\begin{array}{c}\left(R_s(\theta) - R_p(\theta)\right)I_{RGB,refl} \\ + \left(T_s(\theta) - T_p(\theta)\right)I_{RGB,trans}\end{array}\right]\cos 2\left(\theta_{pol} - \phi\right) \quad \cdots (14)$$

Since the reflecting surface information clearly shows the zenith angle $\theta$ and the azimuth angle $\varphi$, the reflection-removed image generator 40 calculates the pixel value $I_{gray,refl}$ of the black-and-white reflection image and the pixel value $I_{gray,trans}$ of the black-and-white transmission image by solving the simultaneous equations obtained by setting the polarization direction $\theta_{pol}$ in Equation (13) to two different polarization directions. The reflection-removed image generator 40 proceeds to step ST24 using the calculated pixel value $I_{gray,refl}$ of the black-and-white reflection image and the calculated pixel value $I_{gray,trans}$ of the black-and-white transmission image as characteristic information.

In step ST24, the image processing system optimizes the characteristic information. The reflection removal result for a color image is given by Equation (14), similarly to Equation (13). In Equation (14), the pixel value $I_{RGB,refl}$ of the color reflection image and the pixel value $I_{RGB,trans}$ of the color transmission image, which are characteristic information, are unknown. Therefore, the reflection-removed image generator 40 of the image processing system 10 uses the pixel value $I_{gray,refl}$ of the black-and-white reflection image and the pixel value $I_{gray,trans}$ of the black-and-white transmission image as initial values to optimize the characteristic information to minimize the correlation between the pixel value $I_{RGB,reft}$ of the color reflection image representing the reflection component and the pixel value $I_{RGB,trans}$ of the color transmission image representing the transmission component.

The reflection-removed image generator 40 may calculate the geometric correlation as in the second embodiment, or may calculate the correlation in the feature amount space. The reflection-removed image generator 40 optimizes the characteristic information so that the calculated correlation is minimized. The reflection-removed image generator 40 calculates the characteristic information that minimizes the correlation using the same method as in the second embodiment, and then, the process proceeds to step ST25.

In step ST25, the image processing system generates a reflection-removed color image. The reflection-removed image generator 40 of the image processing system 10 performs the calculation of Equation (14) using the characteristic information optimized in step ST24 and the angle indicated by the reflecting surface information acquired in step ST22 to generate a reflection-removed color image in which specular reflection is removed, and then, the process proceeds to step ST26.

In step ST26, the image processing system outputs a reflection-removed color image. The output unit 50 of the image processing system 10 outputs the reflection-removed color image generated in step ST25 to an external device such as a display device, a recording device, or a control device that performs various types of control using the reflection-removed color image. The output unit 50 may use the correlation, which is an evaluation index used in the optimization of the characteristic information in the reflection-removed image generator 40, as the accuracy of the reflection removal result, for example, and superimpose a display based on the correlation when the characteristic information is optimized on the corresponding position of the reflection-removed color image. The output unit 50 may divide the image acquired by the image acquirer 20 into a plurality of regions, calculate the correlation for each region, and superimpose a display based on the correlation when the characteristic information is optimized on the corresponding region of the reflection-removed color image.

As described above, according to the third embodiment, similarly to the first and second embodiments, a reflection-removed color image can be generated with higher sensitivity than when a reflection-removed color image is generated from a color polarized image acquired by performing imaging via a polarizing element and a color filter. According to the third embodiment, it is possible to generate an artifact-free reflection-removed color image. The occurrence state of specular reflection can be grasped by the display based on the evaluation index. Furthermore, a reflection-removed color image can be generated using reflecting surface information that indicates the angle of the reflecting surface of the subject.

<4. Modification Example>

By the way, in the above embodiments, a case where the color image obtained by the color image acquirer 22 is in the RGB color space, but a color image in another color space may be used. For example, since the above-mentioned artifacts occur with respect to color, if a color image uses a color space in which luminance and color are separated, such as an HSV color space or an YCrCb color space, color artifacts can be made less likely to occur by optimizing the characteristic information so that the color correlation is reduced.

<5. Application Example>

The technology according to the present disclosure can be applied to various fields. For example, the technology according to the present disclosure may be realized as a device equipped in any type of moving body such as an automobile, an electric vehicle, a hybrid electric vehicle, a motorcycle, a bicycle, a personal mobility device, an airplane, a drone, a ship, and a robot. The technology may be realized as a device mounted in equipment that is used in a production process in a factory or equipment that is used in a construction field.

If applied to such a field, since a high-sensitivity reflection-removed color image can be obtained, fatigue of drivers and workers can be reduced. Since the reflection caused by the subject can be removed, automated driving and the like can be performed more safely.

The series of processing described in the specification can be executed by hardware, software, or a composite configuration of both. When the processing is executed by software, a program in which a processing sequence has been recorded is installed in a memory in a computer embedded in dedicated hardware and executed. Alternatively, the program can be installed in a general-purpose computer capable of executing various types of processing and executed.

For example, the program can be recorded in advance in a hard disk, SSD (Solid State Drive), or ROM (Read Only Memory) as a recording medium. Alternatively, the program can be temporarily or permanently stored (recorded) in a removable recording medium such as a flexible disk, a CD-ROM (Compact Disc Read Only Memory), a MO (Magneto optical) disk, a DVD (Digital Versatile Disc), a BD (Blu-Ray Disc (registered trademark)), a magnetic disk, and a semiconductor memory card. Such a removable recording medium can be provided as so-called package software.

The program may be transferred from a download site to the computer wirelessly or by wire via a network such as a local area network (LAN) or the Internet, in addition to being installed in the computer from the removable recording medium. The computer can receive the program transferred in this way and install the program in a recording medium such as a built-in hard disk.

The effects described in the present specification are merely examples and are not limited, and there may be additional effects not described. The present technology should not be construed as being limited to the embodiments of the technology described above. The embodiments of the present technology disclose the present technology in the form of examples, and it is obvious that a person skilled in the art can modify or substitute the embodiments without departing from the gist of the present technique. That is, claims should be taken into consideration in order to determine the gist of the present technology.

The signal processing device of the present technology can also have the following configuration.

(1) An image processing device including a reflection-removed image generator that calculates characteristic information related to black-and-white reflection removal results generated based on a black-and-white polarized image, and generates a reflection-removed color image in which specular reflection is removed from a color image using the calculated characteristic information.

(2) The image processing device according to (1), wherein the reflection-removed image generator calculates information indicating a relationship between the black-and-white polarized image and an average luminance calculated from an image for each polarization direction in the black-and-white polarized image as the characteristic information, generates a color polarized image based on the characteristic information and the color image, and removes the specular reflection calculated based on the generated color polarized image from the color image to generate the reflection-removed color image.

(3) The image processing device according to (2), wherein the reflection-removed image generator generates the color polarized image by multiplying the color image by the characteristic information indicating a ratio of a luminance of the black-and-white polarized image to the average luminance.

(4) The image processing device according to (1), wherein the reflection-removed image generator calculates information used for obtaining the black-and-white reflection removal result from the black-and-white polarized image as the characteristic information and generates the reflection-removed color image based on the characteristic information and the color image.

(5) The image processing device according to (4), wherein the reflection-removed image generator optimizes the characteristic information and generates the reflection-removed color image based on the optimized characteristic information and the color image.

(6) The image processing device according to (5), wherein the reflection-removed image generator calculates information related to specular reflection in the black-and-white polarized image as the characteristic information, optimizes the characteristic information to minimize a correlation between a luminance component and a specular reflection component of the color image, and generates the reflection-removed color image using the color image and the optimized characteristic information.

(7) The image processing device according to (6), wherein the reflection-removed image generator uses Stokes parameters of the black-and-white polarized image used for calculation of the specular reflection component as the characteristic information and performs the optimization using the Stokes parameters indicated by the characteristic information as initial values.

(8) The image processing device according to (5), further including a reflecting surface information acquirer that acquires reflecting surface information indicating an angle of a reflecting surface of a subject that causes the specular reflection, wherein the reflection-removed image generator calculates information indicating polarization characteristics of the black-and-white polarized image using together with the reflecting surface information acquired by the reflecting surface information acquirer as the characteristic information, optimizes the characteristic information according to the color image, and generates the reflection-removed color image using the color image, the optimized characteristic information, and the reflecting surface information acquired by the reflecting surface information acquirer.

(9) The image processing device according to (8), wherein the reflection-removed image generator uses a black-and-white reflection image and a black-and-white transmission image as the characteristic information, and optimizes the characteristic information to minimize a correlation between a color reflection image and a color transmission image based on the color image.

(10) The image processing device according to (9), wherein the reflection-removed image generator optimizes the characteristic information using the black-and-white reflection image and the black-and-white transmission image as initial values.

(11) The image processing device according to any one of (5) to (10), wherein the reflection-removed image generator calculates a geometric correlation or a correlation in a feature amount space to optimize the characteristic information.

(12) The image processing device according to any one of (5) to (11), further including an output unit that outputs the reflection-removed color image generated by the reflection-removed image generator and an evaluation index used in optimization of the characteristic information.

(13) The image processing device according to (11), wherein the output unit superimposes a display based on the evaluation index on a corresponding position of the reflection-removed color image.

(14) The image processing device according to any one of (1) to (13), wherein the color image is an image in an RGB color space, or a color space in which luminance and color are separated.

[Reference Signs List]

| | |
|---|---|
| 10 | Image processing system |
| 20 | Image acquirer |
| 21 | Black-and-white polarized image acquirer |
| 22 | Color image acquirer |
| 30 | Reflecting surface information acquirer |
| 40 | Reflection-removed image generator |
| 50 | Output unit |
| 211 | Image sensor |
| 212 | Polarizing filter |
| 213 | Lens |
| 214, 216-1 to 216-4, 217 | Polarizing plate |
| 215, 215-1 to 215-4 | Imaging unit |

**Claims**

1. An image processing device comprising
a reflection-removed image generator that calculates characteristic information related to black-and-white reflection removal results generated based on a black-and-white polarized image, and generates a reflection-removed color image in which specular reflection is removed from a color image using the calculated characteristic information.

2. The image processing device according to claim 1, wherein
the reflection-removed image generator calculates information indicating a relationship between the black-and-white polarized image and an average luminance calculated from an image for each polarization direction in the black-and-white polarized image as the characteristic information, generates a color polarized image based on the characteristic information and the color image, and removes the specular reflection calculated based on the generated color polarized image from the color image to generate the reflection-removed color image.

3. The image processing device according to claim 2, wherein
the reflection-removed image generator generates the color polarized image by multiplying the color image by the characteristic information indicating a ratio of a luminance of the black-and-white polarized image to the average luminance.

4. The image processing device according to claim 1, wherein
the reflection-removed image generator calculates information used for obtaining the black-and-white reflection removal result from the black-and-white polarized image as the characteristic information and generates the reflection-removed color image based on the characteristic information and the color image.

5. The image processing device according to claim 4, wherein
the reflection-removed image generator optimizes the characteristic information and generates the reflection-removed color image based on the optimized characteristic information and the color image.

6. The image processing device according to claim 5, wherein
the reflection-removed image generator calculates information related to specular reflection in the black-and-white polarized image as the characteristic information, optimizes the characteristic information to minimize a correlation between a luminance component and a specular reflection component of the color image, and generates the reflection-removed color image using the color image and the optimized characteristic information.

7.  The image processing device according to claim 6, wherein
the reflection-removed image generator uses Stokes parameters of the black-and-white polarized image used for calculation of the specular reflection component as the characteristic information and performs the optimization using the Stokes parameters indicated by the characteristic information as initial values.

8.  The image processing device according to claim 5, further comprising a reflecting surface information acquirer that acquires reflecting surface information indicating an angle of a reflecting surface of a subject that causes the specular reflection, wherein
the reflection-removed image generator calculates information indicating polarization characteristics of the black-and-white polarized image using together with the reflecting surface information acquired by the reflecting surface information acquirer as the characteristic information, optimizes the characteristic information according to the color image, and generates the reflection-removed color image using the color image, the optimized characteristic information, and the reflecting surface information acquired by the reflecting surface information acquirer.

9.  The image processing device according to claim 8, wherein
the reflection-removed image generator uses a black-and-white reflection image and a black-and-white transmission image as the characteristic information, and optimizes the characteristic information to minimize a correlation between a color reflection image and a color transmission image based on the color image.

10. The image processing device according to claim 9, wherein
the reflection-removed image generator optimizes the characteristic information using the black-and-white reflection image and the black-and-white transmission image as initial values.

11. The image processing device according to claim 5, wherein
the reflection-removed image generator calculates a geometric correlation or a correlation in a feature amount space to optimize the characteristic information.

12. The image processing device according to claim 5, further comprising an output unit that outputs the reflection-removed color image generated by the reflection-removed image generator and an evaluation index used in optimization of the characteristic information.

13. The image processing device according to claim 12, wherein
the output unit superimposes a display based on the evaluation index on a corresponding position of the reflection-removed color image.

14. The image processing device according to claim 1, wherein
the color image is an image in an RGB color space, or a color space in which luminance and color are separated.

15. An image processing method comprising allowing a reflection-removed image generator to calculate characteristic information related to black-and-white reflection removal results generated based on a black-and-white polarized image and generate a reflection-removed color image in which specular reflection is removed from a color image using the calculated characteristic information.

16. A program for causing a computer to execute image processing, the computer executing:

    calculating characteristic information related to black-and-white reflection removal results generated based on a black-and-white polarized image; and
    generating a reflection-removed color image in which specular reflection is removed from a color image using the calculated characteristic information.

EP 4 254 935 A1

Fig. 1

COLOR IMAGE
ACQUIRER
22

BLACK-AND-WHITE
POLARIZED IMAGE
ACQUIRER
21

20

REFLECTION-
REMOVED IMAGE
GENERATOR
40

OUTPUT UNIT
50

10

Fig. 2

Fig. 3

Fig. 4

```
                        ┌─────────────────┐
                        │      START      │
                        └─────────────────┘
                                 │
                                 ▼
ST1 ┐          ┌───────────────────────────────┐
    │          │  ACQUIRE BLACK-AND-WHITE      │
    │          │  POLARIZED IMAGE AND          │
    │          │  COLOR IMAGE                  │
               └───────────────────────────────┘
                                 │
                                 ▼
ST2 ┐          ┌───────────────────────────────┐
    │          │  CALCULATE CHARACTERISTIC     │
    │          │  INFORMATION                  │
               └───────────────────────────────┘
                                 │
                                 ▼
ST3 ┐          ┌───────────────────────────────┐
    │          │  GENERATE COLOR               │
    │          │  POLARIZED IMAGE              │
               └───────────────────────────────┘
                                 │
                                 ▼
ST4 ┐          ┌───────────────────────────────┐
    │          │  GENERATE                     │
    │          │  REFLECTION-REMOVED           │
    │          │  COLOR IMAGE                  │
               └───────────────────────────────┘
                                 │
                                 ▼
ST5 ┐          ┌───────────────────────────────┐
    │          │  OUTPUT                       │
    │          │  REFLECTION-REMOVED           │
    │          │  COLOR IMAGE                  │
               └───────────────────────────────┘
                                 │
                                 ▼
                        ┌─────────────────┐
                        │       END       │
                        └─────────────────┘
```

Fig. 5

```
                    ┌─────────────────────┐
                    │        START        │
                    └─────────────────────┘
                              │
                              ▼
ST11 ─┐         ┌─────────────────────────┐
      └─        │ ACQUIRE BLACK-AND-WHITE  │
                │   POLARIZED IMAGE AND    │
                │       COLOR IMAGE        │
                └─────────────────────────┘
                              │
                              ▼
ST12 ─┐         ┌─────────────────────────┐
      └─        │ CALCULATE CHARACTERISTIC │
                │       INFORMATION        │
                └─────────────────────────┘
                              │
                              ▼
ST13 ─┐         ┌─────────────────────────┐
      └─        │  OPTIMIZE CHARACTERISTIC │
                │       INFORMATION        │
                └─────────────────────────┘
                              │
                              ▼
ST14 ─┐         ┌─────────────────────────┐
      └─        │        GENERATE          │
                │   REFLECTION-REMOVED     │
                │       COLOR IMAGE        │
                └─────────────────────────┘
                              │
                              ▼
ST15 ─┐         ┌─────────────────────────┐
      └─        │         OUTPUT           │
                │   REFLECTION-REMOVED     │
                │       COLOR IMAGE        │
                └─────────────────────────┘
                              │
                              ▼
                    ┌─────────────────────┐
                    │         END         │
                    └─────────────────────┘
```

Fig. 6

Fig. 7

ACCURACY

HIGH
(CORRELATION
LOW)

LOW
(CORRELATION
HIGH)

Fig. 8

Fig. 9

```
                    ┌──────────────────────┐
                    │        START         │
                    └──────────────────────┘
                               │
                               ▼
ST21 ┐              ┌──────────────────────┐
     │              │  ACQUIRE BLACK-AND-WHITE │
     │              │   POLARIZED IMAGE AND    │
     │              │      COLOR IMAGE         │
                    └──────────────────────┘
                               │
                               ▼
ST22 ┐              ┌──────────────────────┐
     │              │   ACQUIRE REFLECTING     │
     │              │   SURFACE INFORMATION    │
                    └──────────────────────┘
                               │
                               ▼
ST23 ┐              ┌──────────────────────┐
     │              │  CALCULATE CHARACTERISTIC │
     │              │       INFORMATION        │
                    └──────────────────────┘
                               │
                               ▼
ST24 ┐              ┌──────────────────────┐
     │              │  OPTIMIZE CHARACTERISTIC │
     │              │       INFORMATION        │
                    └──────────────────────┘
                               │
                               ▼
ST25 ┐              ┌──────────────────────┐
     │              │        GENERATE          │
     │              │   REFLECTION-REMOVED     │
     │              │      COLOR IMAGE         │
                    └──────────────────────┘
                               │
                               ▼
ST26 ┐              ┌──────────────────────┐
     │              │         OUTPUT           │
     │              │   REFLECTION-REMOVED     │
     │              │      COLOR IMAGE         │
                    └──────────────────────┘
                               │
                               ▼
                    ┌──────────────────────┐
                    │         END          │
                    └──────────────────────┘
```

## INTERNATIONAL SEARCH REPORT

| International application No. |
| --- |
| **PCT/JP2021/038543** |

**A. CLASSIFICATION OF SUBJECT MATTER**

*H04N 5/232*(2006.01)i; *H04N 5/225*(2006.01)i; *H04N 9/07*(2006.01)i
FI: H04N5/232 290; H04N5/225 400; H04N9/07 A

According to International Patent Classification (IPC) or to both national classification and IPC

**B. FIELDS SEARCHED**

Minimum documentation searched (classification system followed by classification symbols)

H04N5/232; H04N5/225; H04N9/07

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | 伊藤 泉, 偏光カメラによる不可視情毚の可視化, SSII2015 第21回 画像センシングシンポジウム 講演論文集 [CD-ROM], Symposium on Sensing via Image Information. 10 June 2015, 109-1 to 109-3, non-official translation (ITO, Izumi. Visualization of invisible information with a polarized camera. Proceedings of SSII2015 21st Symposium on Sensing via Image Information.) <br> page 1, left column, line 1 to page 2, left column, line 5 | 1, 4, 14-16 |
| A | | 2-3, 5-13 |
| A | JP 2016-127365 A (RICOH CO., LTD.) 11 July 2016 (2016-07-11) <br> entire text, all drawings | 1-16 |
| A | JP 2013-148505 A (RICOH CO., LTD.) 01 August 2013 (2013-08-01) <br> entire text, all drawings | 1-16 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **14 December 2021** | **28 December 2021** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2021/038543**

| Patent document cited in search report | | | Publication date (day/month/year) | Patent family member(s) | Publication date (day/month/year) |
|---|---|---|---|---|---|
| JP | 2016-127365 | A | 11 July 2016 | (Family: none) | |
| JP | 2013-148505 | A | 01 August 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018092540 A

**Non-patent literature cited in the description**

- **DAISUKE MIYAZAKI ; KATSUSHI IKEUCHI.** Basic Theory of Polarization and Its Applications. *IPSJ Transactions on Computer Vision and Image Media,* 2008, vol. 1 (1), 64-72